# EUROPEAN PATENT APPLICATION

(11) **EP 4 851 904 A1**
(43) Date of publication of application: **09.12.2026**
(21) Application number: 26180893.5
(22) Date of filing: 26.05.2026
(51) Int. Cl.: G06Q 30/018

(54) **SYSTEMS AND METHODS FOR ARTIFICIAL INTELLIGENCE BASED LOAN ORIGINATION AND PROCESSING**

(30) Priority: 05.06.2025 US 202519229489
(71) Applicant: Tidalwave Tech Inc., New York, NY 10023 (US)
(72) Inventor: Deng, Jiuqing, Kirkland, WA 98033 (US); Olsen, Christopher Bryan, Thompsons Station, TN 37179 (US); Li, Cheng, New York, NY 10025 (US); Li, Yui Sing, Markham ON, L6C 3J2 (CA); Xu, Yushi, Scarsdale, NY 10583 (US)
(74) Representative: VKK Patentanwälte PartG mbB

(57) **Abstract**

Described herein are systems and methods for artificial intelligence (AI)-based financial data processing to provide comprehensive analysis results and improved processing efficiency. The mortgage engine integrates rules-based responses with the language model to analyze user conversation input and provide context-aware interactive guidance. The presented data processing system may use machine learning (ML) or AI algorithms to perform document processing, identify one or more financial patterns, discover inconsistencies among the input documents, and output recommendations and summaries for improved loan origination processing efficiency and accuracy.

## Description

### BACKGROUND

### A. Technical Field

The present disclosure relates generally to systems and methods for artificial intelligence (AI)-based financial data processing for improved performance, features, and uses. More particularly, the present disclosure relates to systems and methods for AI-based loan origination and processing for enhanced accuracy and efficiency.

### B. Background

Conventional loan origination is a complex and cumbersome process that oftentimes overwhelms borrowers with new concepts and specific terminology. The standard loan application procedure involves multiple stages, such as educating the borrower, gathering necessary information and documents, explaining and discussing details, choosing a suitable loan product, verifying financial data (including credit history, liabilities, employment, income, and assets), addressing issues that arise, exploring various services like title searches and appraisals, and engaging with various stakeholders including loan officers, processors, and closers. Such activities span across diverse systems, interfaces, and human agents, demanding substantial commitments from both borrowers and lenders. Consequently, this process is time-consuming and resource-intensive and may introduce unnecessary friction.

In the loan origination process, financial data is analyzed for financial decisions, such as approving or denying a mortgage loan, determining an annual percentage rate (APR), etc. Typically, such an analysis is performed manually to examine various financial documents, e.g., user credit reports, bank statements, etc. Those documents may be excessive and from different sources, with raw financial data not properly aggregated. As a result, it would be time-consuming and even challenging for information extraction and analysis to make financial decisions accurately and efficiently.

Accordingly, what is needed are systems and methods for loan origination and processing for improved accuracy and efficiency.

### BRIEF DESCRIPTION OF THE DRAWINGS

References will be made to embodiments of the disclosure, examples of which may be illustrated in the accompanying figures. These figures are intended to be illustrative, not limiting. Although the disclosure is generally described in the context of these embodiments, it should be understood that it is not intended to limit the scope of the disclosure to these particular embodiments. Items in the figures may not be to scale.
Figure ("FIG.") 1 depicts architecture for financial data processing, according to embodiments of the present disclosure.
FIG. 2 depicts a component view for financial data processing, according to embodiments of the present disclosure.
FIG. 3 depicts an interactive process for loan origination via an agentic AI platform, according to embodiments of the present disclosure.
FIG. 4 depicts a process of supportive information analysis, according to embodiments of the present disclosure.
FIG. 5 depicts a process of processing engine customization and integration, according to embodiments of the present disclosure.
FIG. 6 depicts a simplified block diagram of a computing device/information handling system, according to embodiments of the present disclosure.

### DETAILED DESCRIPTION OF EMBODIMENTS

In the following description, for purposes of explanation, specific details are set forth in order to provide an understanding of the disclosure. It will be apparent, however, to one skilled in the art that the disclosure can be practiced without these details. Furthermore, one skilled in the art will recognize that embodiments of the present disclosure, described below, may be implemented in a variety of ways, such as a process, an apparatus, a system, a device, or a method on a tangible computer-readable medium.

Components, or modules, shown in diagrams are illustrative of exemplary embodiments of the disclosure and are meant to avoid obscuring the disclosure. It shall be understood that throughout this discussion that components may be described as separate functional units, which may comprise sub-units, but those skilled in the art will recognize that various components, or portions thereof, may be divided into separate components or may be integrated together, including, for example, being in a single system or component. It should be noted that functions or operations discussed herein may be implemented as components. Components may be implemented in software, hardware, or a combination thereof.

Furthermore, connections between components or systems within the figures are not intended to be limited to direct connections. Rather, data between these components may be modified, re-formatted, or otherwise changed by intermediary components. Also, additional or fewer connections may be used. It shall also be noted that the terms "coupled," "connected," "communicatively coupled," "interfacing," "interface," or any of their derivatives shall be understood to include direct connections, indirect connections through one or more intermediary devices, and wireless connections. It shall also be noted that any communication, such as a signal, response, reply, acknowledgement, message, query, etc., may comprise one or more exchanges of information.

Reference in the specification to "one or more embodiments," "preferred embodiment," "an embodiment," "embodiments," or the like means that a particular feature, structure, characteristic, or function described in connection with the embodiment is included in at least one embodiment of the disclosure and may be in more than one embodiment. Also, the appearances of the above-noted phrases in various places in the specification are not necessarily all referring to the same embodiment or embodiments.

The use of certain terms in various places in the specification is for illustration and should not be construed as limiting. A service, function, or resource is not limited to a single service, function, or resource; usage of these terms may refer to a grouping of related services, functions, or resources, which may be distributed or aggregated. The terms "include," "including," "comprise," "comprising," or any of their variants shall be understood to be open terms, and any lists of items that follow are example items and not meant to be limited to the listed items. A "layer" may comprise one or more operations. The words "optimal," "optimize," "optimization," and the like refer to an improvement of an outcome or a process and do not require that the specified outcome or process has achieved an "optimal" or peak state. The use of memory, database, information base, data store, tables, hardware, cache, and the like may be used herein to refer to system component or components into which information may be entered or otherwise recorded.

In one or more embodiments, a stop condition may include: (1) a set number of iterations have been performed; (2) an amount of processing time has been reached; (3) convergence (e.g., the difference between consecutive iterations is less than a first threshold value); (4) divergence (e.g., the performance deteriorates); (5) an acceptable outcome has been reached; and (6) all of the data has been processed.

One skilled in the art shall recognize that: (1) certain steps may optionally be performed; (2) steps may not be limited to the specific order set forth herein; (3) certain steps may be performed in different orders; and (4) certain steps may be done concurrently.

Any headings used herein are for organizational purposes only and shall not be used to limit the scope of the description or the claims. Each reference/document mentioned in this patent document is incorporated by reference herein in its entirety.

It shall be noted that any experiments and results provided herein are provided by way of illustration and were performed under specific conditions using a specific embodiment or embodiments; accordingly, neither these experiments nor their results shall be used to limit the scope of the disclosure of the current patent document.

Furthermore, it shall be noted that embodiments described herein are framed in the context of loan applications, but one skilled in the art shall recognize that the concepts of the present disclosure are not limited to loan applications and may equally be used in other financial and non-financial contexts.

### A. General Introduction

In the financial sector, a loan applicant's financial data needs to be analyzed for financial decisions, such as approving or denying a mortgage loan, determining an APR, etc. Typically, such an analysis is performed manually to examine various financial documents, e.g., user credit reports, bank statements, etc. Those documents may be excessive and from different sources, with raw financial data not properly aggregated. As a result, it would be time-consuming and even challenging for information extraction and analysis to make financial decisions accurately and efficiently.

Furthermore, some financial documents may be submitted misleadingly, and some pending financial obligations or debits may not be fully presented. For example, in an effort to get a loan that may be unlikely to get approval, a user may provide a bank statement that was dated before some large debit payment date. As a result, the bank statement shows a balance that may be larger than actual disposable funds. Such a bank statement may be submerged in a large quantity of documents to be reviewed. A lending institute, such as a bank or a credit union, may overlook those details and approve a loan at a high risk of default. Accumulating such loans could potentially put the lending institution in a liquidity crisis.

Artificial intelligence (AI) has been developed significantly and used in various applications, including in financial sectors, to perform tasks of learning, reasoning, problem-solving, perception, and/or decision-making. AI-based data processing may significantly improve the efficiency of data processing tasks for various financial applications. However, those input documents may be raw financial data from different sources and may not be aggregated appropriately. The performance of direct processing of those documents by a general AI engine, especially an AI engine without proper training, may be unsatisfactory.

Described in the disclosure are system and method embodiments for AI-based financial data processing to provide comprehensive analysis results for financial decisions. The presented data processing system may use various machine learning (ML) or AI algorithms to perform document classification and extraction across various input documents, identify one or more financial patterns, discover inconsistencies among the input documents, output analysis results to facilitate financial decisions, etc. The system may be deployed on a server or a cloud pat platform for operation.

### B. Architecture Embodiments for Financial Data Processes

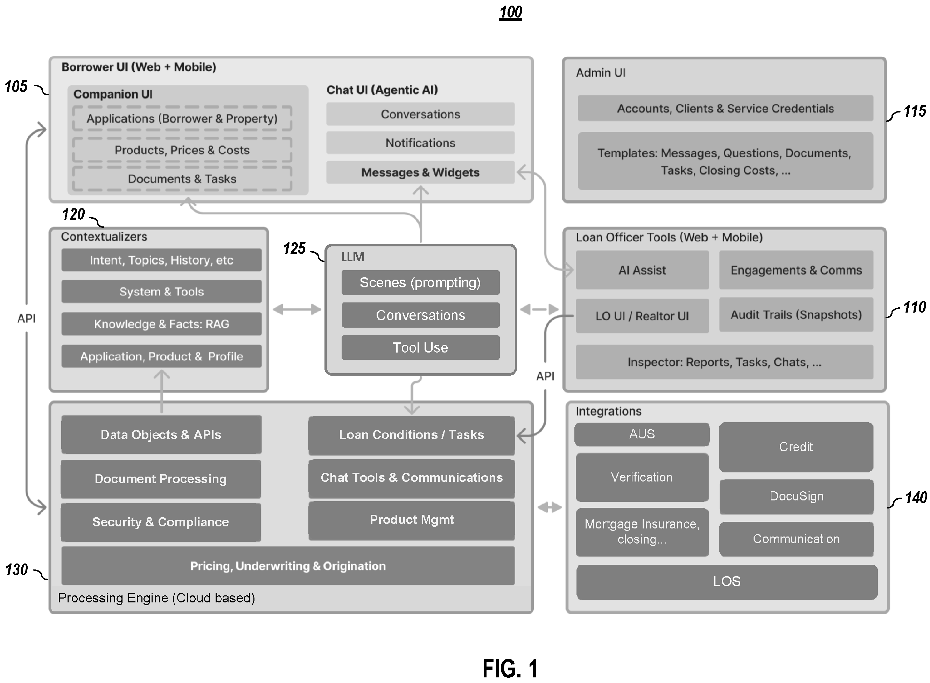

**FIG. 1** depicts architecture for financial data processes, according to embodiments of the present disclosure. The architecture **100** comprises multiple user interfaces (UIs), such as a borrower UI **105,** an administrator UI **110,** a lender UI **110** for a loan officer or a realtor, and/or an administrator (admin) UI **115,** etc., a contextualizer **120,** and a processing engine **130.** The borrower UI **105** may comprise a chat UI for conversational interaction with a user and a companion UI for rendering information, e.g., products, price, cost, documents, tasks, etc. The admin UI **115** is an interface for an administrator to manage user accounts, client & service credentials, configure templates for messages, questions, documents, tasks, etc.

Both the borrower UI **105** and the lender UI **110** may couple to a large language model (LLM) **125,** a machine learning (ML) model, for assisting natural language processing tasks such as prompting user input, carrying on conversations, introducing tool uses, etc. The LLM **125** may communicate with a contextualizer **120** to fetch context information related to one or more inputs received at the borrower UI **105.** The context information includes, but is not limited to, user topics, history records, lender product and profile information, knowledge, and facts supporting Relationship-Aware Graph Querying (RAG).

The processing engine **130** communicates with the borrower UI **105,** the lender UI **110,** and the LLM **125** to receive outputs from these components and generate a processing result for rendering at the borrower UI **105.** The mortgage engine **130** analyzes user input from conversations and provides context-aware interactive guidance, e.g., in a form of easy-to-understand explanations, instructions, and suggestions tailored to user questions. The interactive guidance generates recommendations and actionable outputs for the borrower to reduce the complexities of the lending process and drive the loan application. The processing engine **130** may comprise a plurality of modules for various functionalities. For example, the processing engine **130** includes a data object module, a document processing module, a security and compliance module, a loan condition or task module, a chat communication module, a product management module, etc.

In one or more embodiments, the processing engine **130** may also send the processing result to the contextualizer **120** to update context information, e.g., history records. The processing engine **130** may perform various financial processing tasks, including document processing, security compliance, loan conditions and tasks generation, product management, pricing, and underwriting origination, etc. Depending on specific applications, the processing engine **130** may be a consumer mortgage processing engine, a commercial real estate loan processing engine, an auto loan processing engine, etc. The processing engine **130** may be deployed on a cloud as a cloud engine to perform the processing tasks using cloud resources. For example, the processing engine **130** may be hosted on a cloud and configured to incorporate a relational database management system (RDBMS), e.g., PostgreSQL.

In one or more embodiments, the processing engine **130** may communicate with one or more applications **140** for enhanced integrations. Those applications may be DocuSign for collecting borrower legal signatures, a credit report verification application (e.g., Xactus), a loan origination system (LOS) (e.g., Encompass), a loan-closing application (e.g., LodeStar), etc. The LOS is a system that streamlines and automates the process of originating and managing mortgages, from initial application to closing. The processing engine **130** may send a processing result to one or more third-party applications for further steps, such as requesting a credit report of a borrower or initiating a loan origination process, etc. The processing engine **130** may also receive outputs from one or more third-party applications for additional processing and/or presenting the received third-party outputs to the borrower via the borrower UI **105.**

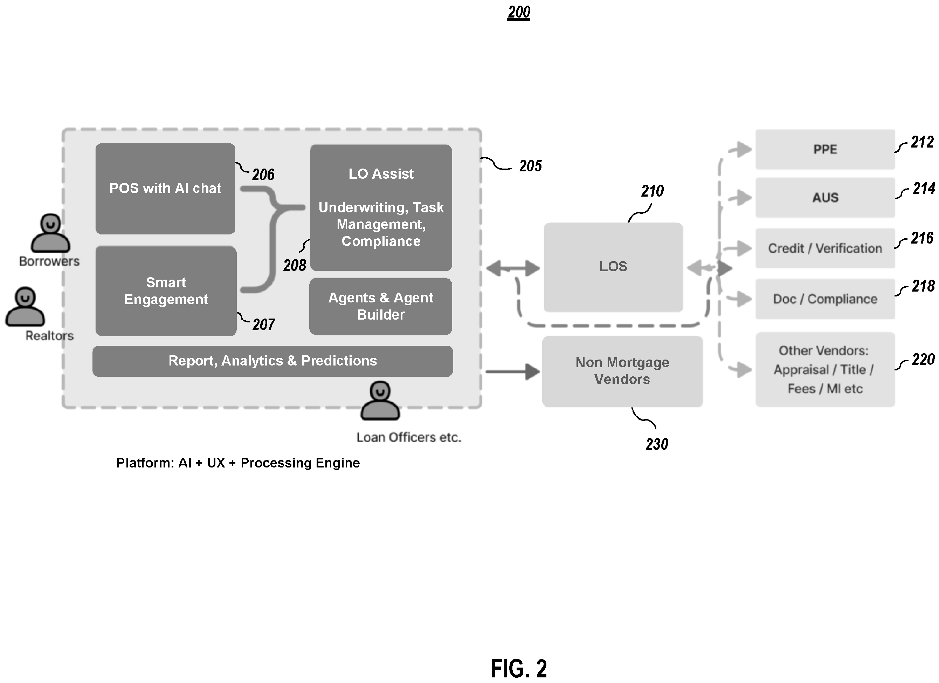

**FIG. 2** depicts a component view for financial data processing, according to embodiments of the present disclosure. An agentic AI platform **205** interacts with a loan origination system (LOS) **210** and one or more related non-mortgage vendors **230,** e.g., an OCR application or an E-sign application. The AI platform **205** is a platform with integrations of a point-of-sale (POS) portal **206** for a borrower, a smart engagement portal **207** for a realtor, a loan officer (LO) assistance portal **208** that couples to the POS portal **206** and the smart engagement portal **207** to perform operations including but not limited to underwriting, task management, compliance, etc. The AI platform **205** may comprise one or more agents, and one or more agent builders for agent configuration or customization. The POS portal **206** is a dynamic and agentic AI-powered system that can take immediate action based on applicant information and enable autonomous decision-making. The POS portal **206** provides users (e.g., borrowers or realtors) the tools to digitally work with their mortgage loan officers. A borrower may access the POS portal from a desktop, a tablet, or a mobile device to initiate a task (e.g., a mortgage application), upload necessary documentation(s), track an application status, and communicate with a corresponding loan officer, etc.

Compared to generative AI that relies on prompts and patterns to generate outputs, the agentic AI platform **205** may perform planning, task execution, and decision making independently. The agentic AI platform **205** can simultaneously place originators and borrowers at the center of a loan application process, thus alleviating or eliminating key problems that borrowers may have in the application process.

The LOS **210** integrates a plurality of components or engines to facilitate loan origination and processing. As shown in FIG. 2, the LOS **210** may comprise a product and pricing engine (PPE) **212,** an automated underwriting system (AUS) **214,** a credit verification engine **216,** a compliance engine **218,** and one or more other supplemental applications **220** (e.g., an appraisal application, a title application, a Mortgage insurance (MI) application, etc.).

The PPE **212** performs loan program search, automatically provides loan and pricing options to offer lenders the ability to search products efficiently, provides instant rate quotes to borrowers, and submits lock requests. The PPE **212** enables a streamlined workflow for lenders for enhanced profitability. The AUS **214** runs the mortgage application to determine if the mortgage application meets one or more criteria for approval. The AUS **214** is compatible with Fannie Mae's Desktop Underwriter (DU) and Freddie Mac's Loan Product Advisor (LPA). It is configured to run both the DU and LPA at the point of application to give lenders an advantage for comparison and the best outcome. The credit verification engine **216** verifies borrower credits, and the compliance engine **218** ensures the LO process complies with regulations and legal requirements.

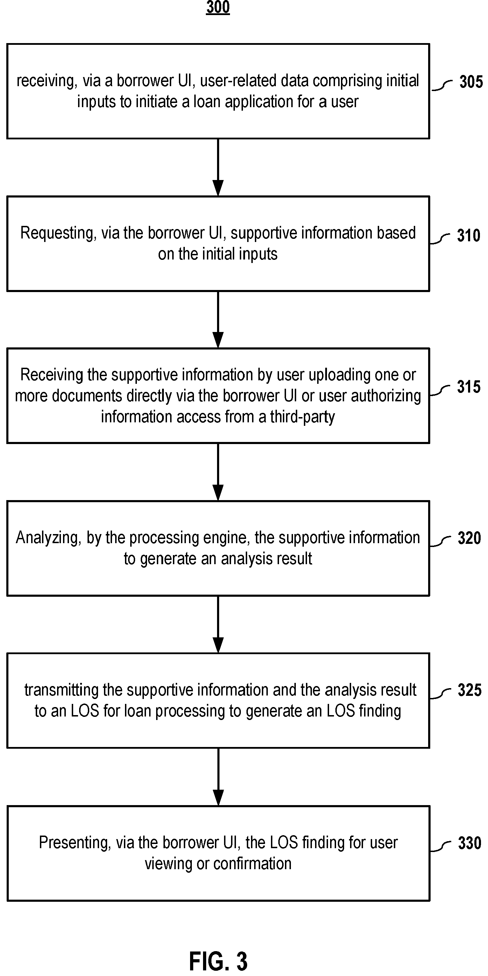

**FIG. 3** depicts an interactive process for loan origination via an agentic AI platform, according to embodiments of the present disclosure. In step **305,** user-related data comprising initial inputs to initiate a loan application is received via a borrower UI. The borrower UI may comprise a chat UI that couples to an LLM to support conversational interaction with the user and a companion UI for rendering information for user review. The initial inputs may include information on a prospective property, a desired loan type, a desired loan amount, etc.

In step **310,** based on the initial inputs, the borrower UI may request the user to provide supportive information, such as user income proof (e.g., W-2 form), bank statement, authorization for credit report access, etc. Such a request may be presented in one or more questions via the chat UI to solicit the user's answer or in the companion UI for the user's interaction (e.g., user's signature for credit report access). In step **315,** the supportive information may be received by the user uploading one or more documents via the borrower UI directly or by the user authorizing information access from a third-party.

In step **320,** the supportive information is analyzed by the processing engine (e.g., a mortgage engine) to generate an analysis result. In one or more embodiments, the processing engine may analyze the supportive information together with one or more documents (e.g., a credit report) fetched, under the user's authorization, from a third-party. The analysis may comprise optical character recognition (OCR) for one or more documents, identifying large repetitive expenditure, discovering irregularities in incoming and spending, etc. The analysis result may comprise a pre-processing summary and one or more alerts (if any) for any irregularities found.

Typically, supportive information, e.g., bank statements or credit card statements, may have various document layouts and comprise excessive transaction records. It would be inefficient or distracting for an LOS to process and analyze all those transaction records. By examining the supportive information first and sending an analysis result together with the supportive information to the LOS, the LOS may be focused on the loan origination processing at higher accuracy and efficiency, with the assistance of the analysis result.

In step **325,** the supportive information and the analysis result are transmitted to an LOS for loan processing to generate an LOS finding. The loan processing may comprise loan program search, loan pricing, rate options, and loan scenarios, etc. The LOS finding may be an approval-eligible finding, a referring-eligible finding, or a cautionary finding. The approval-eligible finding indicates that the application has met one or more qualification criteria for automatic approval. The referring-eligible finding suggests that the application has not met one or more conditions needed for an automated approval and is eligible for manual underwriting. The cautionary finding indicates that the application did not receive automated approval and may not be eligible for manual processing. In one or more embodiments, the eligible approval finding may further comprise one or more eligible loan options with different scenarios, e.g., rates, point requirement, etc. The referring eligible finding may further comprise one or more conditions not met. The cautionary finding typically indicates a hard stop for the application.

In step **330,** the LOS finding is presented via the borrower UI for user viewing or response. For example, if the LOS finding comprises more than one loan option, the user may select one of the presented options for loan closing. If the LOS finding comprises one or more conditions that are not met, the user may provide an explanation or additional information for consideration during the manual underwriting.

### C. Embodiments of Supportive Information Analysis

The supportive information, such as bank statements or credit cards, may be from various organizations with different layouts. Commonly, a lender may request a borrower to provide such information for the last several months or even longer. Those statements may comprise numerous transaction records of different parameters, e.g., values and types. Without a proper analysis, it would be overwhelmed by those detailed transactions. Described in this section are embodiments of supportive information analysis for an efficient and accurate analysis result, which may provide a valuable overview for eligibility decision assistance.

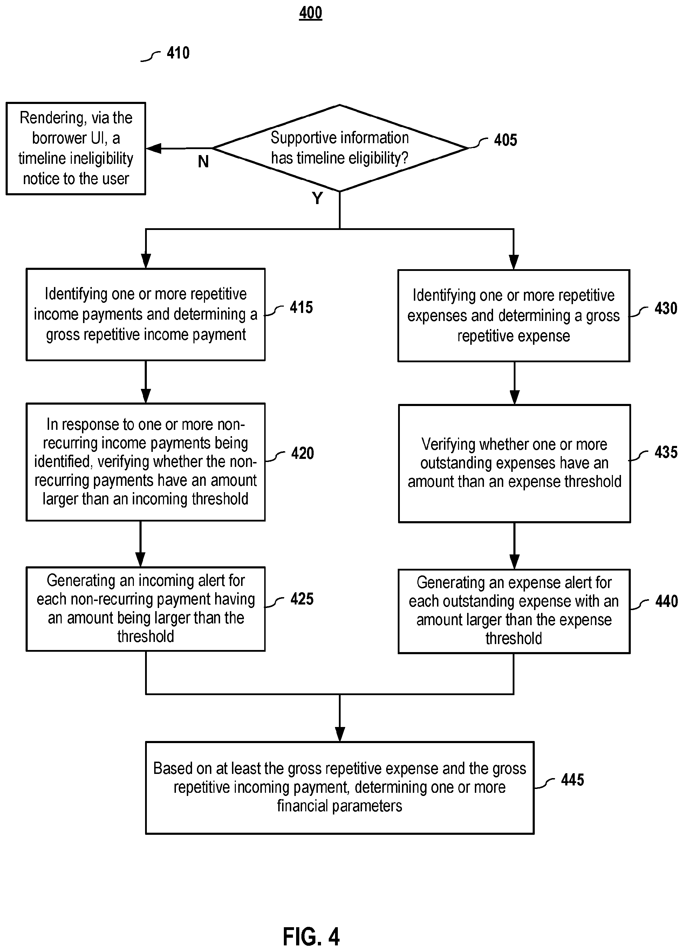

**FIG. 4** depicts a process of supportive information analysis, according to embodiments of the present disclosure. In step **405,** the processing engine identifies whether the supportive information has timeline eligibility. For example, the processing engine may verify whether bank statements or pay stubs provided by the user are from the last few months.

In step **410,** in response to timeline ineligibility being identified, the processing engine renders, via the borrower UI, a timeline ineligibility notice to the user such that user may update the supportive information.

In step **415,** in response to the supportive information having timeline eligibility, the processing engine identifies one or more repetitive income payments and determines a gross repetitive income payment. The repetitive income payments may be payrolls, rental incomes, dividend incomes, etc. The repetitive income payments refer to recurring income payments from the same source and may or may not have identical amounts. For example, the repetitive income payments may include monthly wages of the same amount from an employer and also dividend distributions from a mutual fund or an exchange-traded fund (ETF). The dividends are paid recurrently but may have a different amount for each distribution. For a repetitive income payment with the same amount, the processing engine uses the amount as the effective repetitive incoming payment. While for a repetitive income payment having a variable amount, the processing engine may estimate an effective repetitive incoming payment using an average of the repetitive payments over a period (e.g., 12 months, 24 months, etc.). In one or more embodiments, the gross repetitive income payment is a sum of all effective recurring income payments.

In step **420,** in response to one or more non-recurring income payments being identified, the processing engine verifies whether one non-recurring income payment having an amount larger than an incoming threshold (e.g., an absolute value or a percentage of a repetitive payroll amount). If yes, the process goes to step **425,** in which the processing engine generates an incoming alert for each such non-recurring income payment for attention, such that a loan officer may further perform a manual check. Non-repetitive payments with an amount larger than a threshold (e.g., an absolute value or a percentage of a payroll amount) are specially marked. For example, a user may borrow a large amount of money to temporarily increase a balance to qualify for a threshold (e.g., a balance amount for a 20% down payment) for a loan approval. This balance shown on the statement may not be the real available fund for the user. By identifying non-repetitive payments, the processing engine may estimate the real available balance for the loan applicant more accurately.

Additionally, the processing engine may further verify whether the supportive information comprises a statement explaining such a non-recurring payment. For example, a non-recurring payment may be a gift from a family member, and the user provided a statement from the family member that the user does not need to pay back. In this circumstance, the processing engine may categorize the non-recurring payment as an effective non-recurring payment, with the alert cleared. Otherwise, the alert is still associated with the non-recurring payment for attention.

In parallel to step **415,** in response to the supportive information having timeline eligibility, the processing engine analyzes expenditure transactions to identify one or more repetitive expenses, such as rent payments, student loan payments, car payments, credit card payments, etc., and determines a gross repetitive expense in step **430.** Each repetitive expense is associated with a payee with a corresponding expense payment date and amount, which may or may not have the same payment amount. For example, a user may have an auto loan with a fixed monthly payment and repetitive utility payments with a variable monthly amount. For a repetitive expense having the same amount, the processing engine uses the amount as the effective repetitive expense. While for a repetitive expense having a variable amount, the processing engine may estimate an effective repetitive expense using an average of the repetitive expense over a time period (e.g., 12 months, 24 months, etc.). In one or more embodiments, the gross repetitive expense is a sum of all effective repetitive expenses.

In step **435,** the processing engine verifies whether one or more outstanding expenses have an amount larger than an expense threshold, e.g., an absolute amount or a percentage of a monthly income. The expense threshold may or may not be the same as the incoming threshold. In step **440,** the processing engine generates an expensive alert for each outstanding expense with an amount greater than the expense threshold, such that a loan officer may further perform a manual expense check. Such an outstanding expenses may not be reflected on a bank statement that shows available funds and may need to be considered for an accurate determination of the effective available balance of the borrower.

In step **440,** based on at least the gross repetitive expense and the gross repetitive incoming payment, the processing engine determines one or more financial parameters, e.g., a debt-to-income (DTI) ratio, for the LOS to review and generate LOS findings for a loan, especially a mortgage.

The processing engine may be an agentic AI engine pre-trained using processed loan application data for performance optimization. The processing engine presents a processed result to an underwriter for review and decision-making. The processed result may comprise financial parameters, recommendations, and/or summaries that allow the underwriter to review the processed result for underwriting decisions more efficiently and accurately.

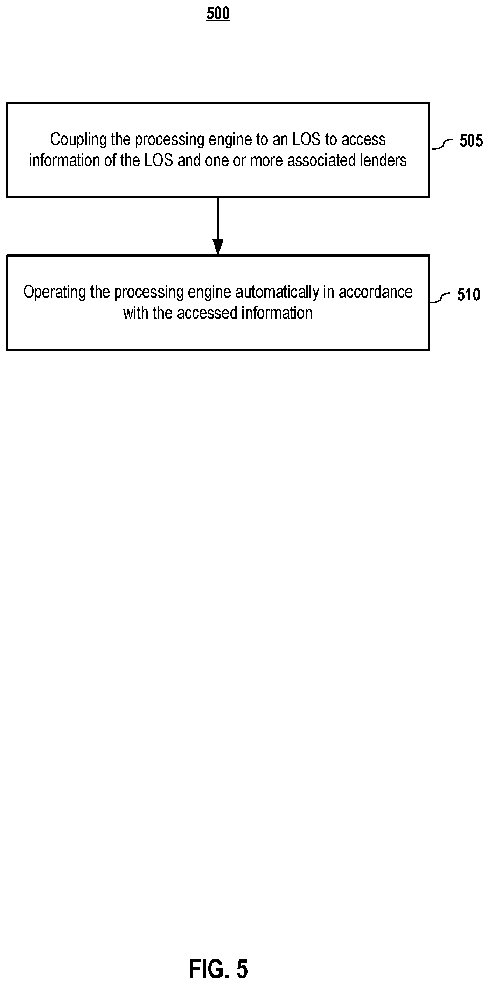

**FIG. 5** depicts a process of processing engine customization and integration, according to embodiments of the present disclosure. The processing engine may be an AI-native platform that combines the knowledge graph of a lender or an LOS with agentic AI to operate in accordance with LOS requirements. In step **505,** the processing engine couples to an LOS to access information of the LOS and one or more associated lenders. In step **510,** the processing engine operates automatically in accordance with the accessed information. For example, the processing engine may inspect a task list for documents needed by the LOS, determine a DTI ratio according to a lender's DTI guidelines, generate a summary or recommendation in compliance with different lender requirements, etc. As a result, the processing engine can seamlessly interact with the LOS and underwriters. The likelihood that a borrower completes a compliant loan application is enhanced.

### D. Computing System Embodiments

In one or more embodiments, aspects of the present patent document may be directed to, may include, or may be implemented on one or more information handling systems (or computing systems). An information handling system/computing system may include any instrumentality or aggregate of instrumentalities operable to compute, calculate, determine, classify, process, transmit, receive, retrieve, originate, route, switch, store, display, communicate, manifest, detect, record, reproduce, handle, or utilize any form of information, intelligence, or data. For example, a computing system may be or may include a personal computer (e.g., laptop), tablet computer, mobile device (e.g., personal digital assistant (PDA), smartphone, phablet, tablet, etc.), smartwatch, server (e.g., blade server or rack server), a network storage device, camera, or any other suitable device and may vary in size, shape, performance, functionality, and price. The computing system may include random access memory (RAM), one or more processing resources such as a central processing unit (CPU) or hardware or software control logic, read only memory (ROM), and/or other types of memory. Additional components of the computing system may include one or more drives (e.g., hard disk drive, solid state drive, or both), one or more network ports for communicating with external devices as well as various input and output (I/O) devices, such as a keyboard, mouse, touchscreen, stylus, microphone, camera, trackpad, display, etc. The computing system may also include one or more buses operable to transmit communications between the various hardware components.

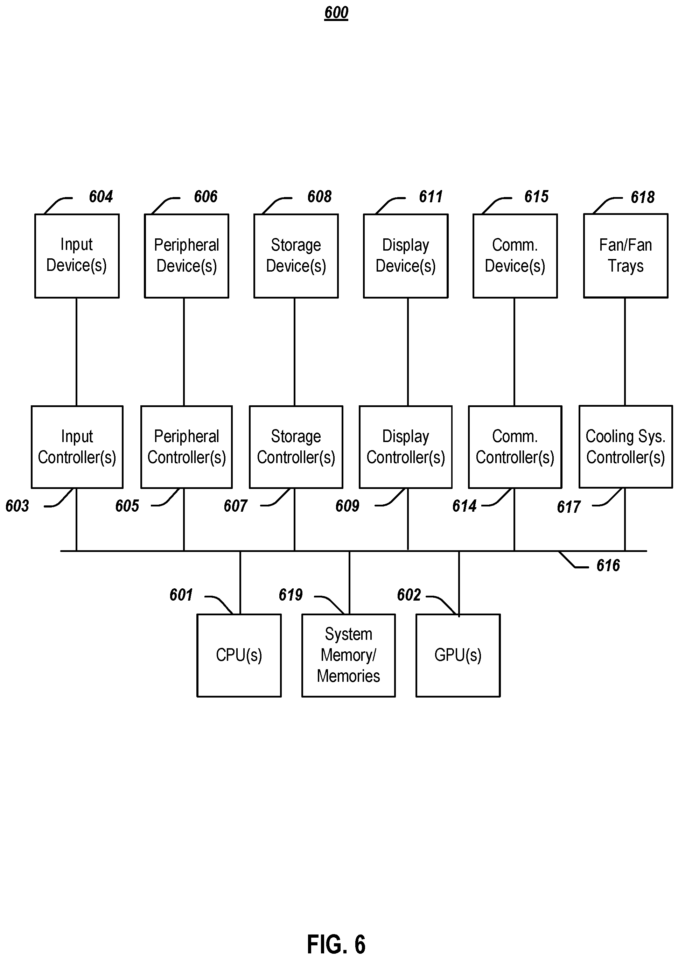

**FIG. 6** depicts a simplified block diagram of an information handling system (or computing system), according to embodiments of the present disclosure. It will be understood that the functionalities shown for system **600** may operate to support various embodiments of a computing system-although it shall be understood that a computing system may be differently configured and include different components, including having fewer or more components as depicted in **FIG. 6****.**

As illustrated in **FIG. 6****, the** computing system **600** includes one or more CPUs **601** that provide computing resources and control the computer. CPU **601** may be implemented with a microprocessor or the like, and may also include one or more graphics processing units (GPU) **602** and/or a floating-point coprocessor for mathematical computations. In one or more embodiments, one or more GPUs **602** may be incorporated within the display controller **609,** such as part of a graphics card or cards. Thy system **600** may also include a system memory **619,** which may comprise RAM, ROM, or both.

A number of controllers and peripheral devices may also be provided, as shown in **FIG. 6****.** An input controller **603** represents an interface to various input device(s) **604.** The computing system **600** may also include a storage controller **607** for interfacing with one or more storage devices **608** each of which includes a storage medium such as magnetic tape or disk, or an optical medium that might be used to record programs of instructions for operating systems, utilities, and applications, which may include embodiments of programs that implement various aspects of the present disclosure. Storage device(s) **608** may also be used to store processed data or data to be processed in accordance with the disclosure. The system **600** may also include a display controller **609** for providing an interface to a display device **611,** which may be a cathode ray tube (CRT) display, a thin film transistor (TFT) display, organic light-emitting diode, electroluminescent panel, plasma panel, or any other type of display. The computing system **600** may also include one or more peripheral controllers or interfaces **605** for one or more peripherals **606.** Examples of peripherals may include one or more printers, scanners, input devices, output devices, sensors, and the like. A communications controller **614** may interface with one or more communication devices **615,** which enables the system **600** to connect to remote devices through any of a variety of networks including the Internet, a cloud resource (e.g., an Ethernet cloud, a Fiber Channel over Ethernet (FCoE)/Data Center Bridging (DCB) cloud, etc.), a local area network (LAN), a wide area network (WAN), a storage area network (SAN) or through any suitable electromagnetic carrier signals including infrared signals. As shown in the depicted embodiment, the computing system **600** comprises one or more fans or fan trays **618** and a cooling subsystem controller or controllers **617** that monitors thermal temperature(s) of the system **600** (or components thereof) and operates the fans/fan trays **618** to help regulate the temperature.

In the illustrated system, all major system components may connect to a bus **616,** which may represent more than one physical bus. However, various system components may or may not be in physical proximity to one another. For example, input data and/or output data may be remotely transmitted from one physical location to another. In addition, programs that implement various aspects of the disclosure may be accessed from a remote location (e.g., a server) over a network. Such data and/or programs may be conveyed through any of a variety of machine-readable media including, for example: magnetic media such as hard disks, floppy disks, and magnetic tape; optical media such as compact discs (CDs) and holographic devices; magneto-optical media; and hardware devices that are specially configured to store or to store and execute program code, such as application specific integrated circuits (ASICs), programmable logic devices (PLDs), flash memory devices, other non-volatile memory (NVM) devices (such as 3D XPoint-based devices), and ROM and RAM devices.

Aspects of the present disclosure may be encoded upon one or more non-transitory computer-readable media with instructions for one or more processors or processing units to cause steps to be performed. It shall be noted that non-transitory computer-readable media shall include volatile and/or non-volatile memory. It shall be noted that alternative implementations are possible, including a hardware implementation or a software/hardware implementation. Hardware-implemented functions may be realized using ASIC(s), programmable arrays, digital signal processing circuitry, or the like. Accordingly, the "means" terms in any claims are intended to cover both software and hardware implementations. Similarly, the term "computer-readable medium or media" as used herein includes software and/or hardware having a program of instructions embodied thereon, or a combination thereof. With these implementation alternatives in mind, it is to be understood that the figures and accompanying description provide the functional information one skilled in the art would require to write program code (i.e., software) and/or to fabricate circuits (i.e., hardware) to perform the processing required.

It shall be noted that embodiments of the present disclosure may further relate to computer products with a non-transitory, tangible computer-readable medium that has computer code thereon for performing various computer-implemented operations. The media and computer code may be those specially designed and constructed for the purposes of the present disclosure, or they may be of the kind known or available to those having skill in the relevant arts. Examples of tangible computer-readable media include, for example: magnetic media such as hard disks, floppy disks, and magnetic tape; optical media such as CDs and holographic devices; magneto-optical media; and hardware devices that are specially configured to store or to store and execute program code, such as ASICs, PLDs, flash memory devices, other non-volatile memory devices (such as 3D XPoint-based devices), and ROM and RAM devices. Examples of computer code include machine code, such as produced by a compiler, and files containing higher level code that are executed by a computer using an interpreter. Embodiments of the present disclosure may be implemented in whole or in part as machine-executable instructions that may be in program modules that are executed by a processing device. Examples of program modules include libraries, programs, routines, objects, components, and data structures. In distributed computing environments, program modules may be physically located in settings that are local, remote, or both.

One skilled in the art will recognize no computing system or programming language is critical to the practice of the present disclosure. One skilled in the art will also recognize that a number of the elements described above may be physically and/or functionally separated into modules and/or sub-modules or combined together.

It will be appreciated to those skilled in the art that the preceding examples and embodiments are exemplary and not limiting to the scope of the present disclosure. It is intended that all permutations, enhancements, equivalents, combinations, and improvements thereto that are apparent to those skilled in the art upon a reading of the specification and a study of the drawings are included within the true spirit and scope of the present disclosure. It shall also be noted that elements of any claims may be arranged differently including having multiple dependencies, configurations, and combinations.

## Claims

1. A computer-implemented method for loan origination management, the method comprising:
receiving, via a borrower user interface (UI), user-related data comprising initial inputs to initiate a loan application for a user, the borrower UI coupled to a large language model (LLM) to analyze user input from conversations and provide interactive guidance;
requesting, via the borrower UI, supportive information based on the initial inputs;
receiving the supportive information by the user uploading one or more documents directly via the borrower UI or the user authorizing information access from a third-party;
analyzing, by a processing engine operating agentic artificial intelligence (AI), the supportive information to generate an analysis result; and
transmitting the supportive information and the analysis result to a loan origination system (LOS) for loan processing to generate a loan origination system (LOS) finding.

2. The computer-implemented method of claim 1 wherein the processing engine is an AI agent pre-trained using processed loan application data for performance optimization.

3. The computer-implemented method of claim 1 wherein the processing engine couples to the LOS to access information of the LOS and one or more associated lenders, and to operate in accordance with the accessed information.

4. The computer-implemented method of claim 1 wherein analyzing the supportive information comprises one or more of:
performing optical character recognition (OCR) for one or more documents;
identifying large repetitive expenditure; and
discovering irregularities in credit and spending.

5. The computer-implemented method of claim 1 further comprising:
presenting, via the borrower UI, the LOS finding for user viewing or confirmation.

6. The computer-implemented method of claim 1 wherein the analysis result comprises a pre-processing summary.

7. The computer-implemented method of claim 6 wherein analyzing the supportive information comprises:
identifying one or more repetitive income payments and determining a gross repetitive income payment;
in response to one or more non-recurring income payments being identified, verifying whether the non-recurring payments have an amount larger than an incoming threshold; and
generating an incoming alert for each non-recurring payment with an amount larger than the threshold, preferably wherein analyzing the supportive information further comprises:
identifying one or more repetitive expenses and determining a gross repetitive expense;
verifying whether one or more outstanding expenses have an amount greater than an expense threshold; and
generating an expense alert for each outstanding expense with an amount larger than the expense threshold.

8. The computer-implemented method of claim 7 wherein analyzing the supportive information further comprises:
determining one or more financial parameters based on at least the gross repetitive expense and the gross repetitive incoming payment, preferably wherein the one or more financial parameters comprise a debt-to-income (DTI) ratio for the LOS to review and generate the LOS finding.

9. A non-transitory computer-readable medium or media comprising one or more sequences of instructions which, when executed by at least one processor, causes steps for loan origination management comprising:
receiving, via a borrower user interface (UI), user-related data comprising initial inputs to initiate a loan application for a user, the borrower UI coupled to a large language model (LLM) to analyze user input from conversations and provide interactive guidance;
requesting, via the borrower UI, supportive information based on the initial inputs;
receiving the supportive information by the user uploading one or more documents directly via the borrower UI or user authorizing information access from a third-party;
analyzing, by a processing engine operating agentic artificial intelligence (AI), the supportive information to generate an analysis result; and
transmitting the supportive information and the analysis result to a loan origination system (LOS) for loan processing to generate a loan origination system (LOS) finding.

10. The non-transitory computer-readable medium or media of claim 9 wherein the processing engine is an AI agent pre-trained using processed loan application data for performance optimization, and/or wherein the processing engine couples to the LOS to access information of the LOS and one or more associated lenders, and operates in accordance with the accessed information.

11. The non-transitory computer-readable medium or media of claim 9 wherein analyzing the supportive information comprises one or more of:
performing optical character recognition (OCR) for one or more documents;
identifying large repetitive expenditure; and
discovering irregularities in credit and spending.

12. The non-transitory computer-readable medium or media of claim 9 further comprising one or more sequences of instructions which, when executed by at least one processor, causes steps to be performed comprising:
presenting, via the borrower UI, the LOS finding for user viewing or confirmation.

13. The non-transitory computer-readable medium or media of claim 9 wherein the analysis result comprises a pre-processing summary, preferably wherein analyzing the supportive information comprises:
identifying one or more repetitive income payments and determining a gross repetitive income payment;
in response to one or more non-recurring income payments being identified, verifying whether the non-recurring payments have an amount larger than an incoming threshold; and
generating an incoming alert for each non-recurring payment with an amount larger than the threshold.

14. The non-transitory computer-readable medium or media of claim 13 wherein analyzing the supportive information further comprises:
identifying one or more repetitive expenses and determining a gross repetitive expense;
verifying whether one or more outstanding expenses have an amount greater than an expense threshold; and
generating an expense alert for each outstanding expense with an amount larger than the expense threshold, preferably wherein analyzing the supportive information further comprises:
determining one or more financial parameters based on at least the gross repetitive expense and the gross repetitive incoming payment.

15. The non-transitory computer-readable medium or media of claim 14 wherein the one or more financial parameters comprise a debt-to-income (DTI) ratio for the LOS to review and generate the LOS finding.
